(19) **Europäisches Patentamt**

**European Patent Office**

**Office européen des brevets**

(11) **EP 1 689 030 A1**

(12) **EUROPEAN PATENT APPLICATION**
published in accordance with Art. 158(3) EPC

(43) Date of publication:
**09.08.2006 Bulletin 2006/32**

(51) Int Cl.:
*H01Q 17/00* (2006.01)      *H01Q 1/52* (2006.01)
*H01Q 21/06* (2006.01)      *G01S 13/93* (2006.01)
*G01S 7/03* (2006.01)       *H01Q 13/08* (2006.01)
*H01Q 1/32* (2006.01)

(21) Application number: **03774025.5**

(22) Date of filing: **14.11.2003**

(86) International application number:
**PCT/JP2003/014543**

(87) International publication number:
**WO 2005/055366 (16.06.2005 Gazette 2005/24)**

(84) Designated Contracting States:
**DE FR**

(71) Applicant: **Hitachi, Ltd.**
**Tokyo 100-8280 (JP)**

(72) Inventors:
• **SHINODA, Hiroshi,**
**c/o Hitachi, Ltd.**
**Kokubunji-shi,**
**Tokyo 185-8601 (JP)**

• **KONDOU, Hiroshi,**
**c/o Hitachi, Ltd.**
**Kokubunji-shi,**
**Tokyo 185-8601 (JP)**

(74) Representative: **Beetz & Partner**
**Steinsdorfstrasse 10**
**D-80538 München (DE)**

(54) **VEHICLE-MOUNTED RADAR**

(57)     A small and light automotive radar having a high detection performance by preventing the road clutter and its in-vehicle positioning is optional is provided. The automotive radar comprises an antenna 1, 2a, 2b equipped with at least one radiating element which radiates linear polarized radio waves; a slit plate 7 which is a metal plate in which a plurality of slits 8 are defined, placed in front of the surface of the antenna 1, 2a, 2b; radio wave absorbers 5 provided between the antenna 1, 2a, 2b and the slit plate 7; and a transceiver device 17 which supplies transmit signals to the antenna 1, 2a, 2b to radiate radio waves and, from signals acquired by receiving reflection waves which are returned waves of the radio waves reflected by an obstruction, detects a direction in which the obstruction exists.

FIG.1

**Description**

FIELD OF THE INVENTION

The present invention relates to an automotive radar that is mounted on a mobile object such as a motor vehicle to detect a direction in which an obstruction exists, a relative distance to some other mobile object, a relative velocity of the some other mobile object, etc.

BACKGROUND OF THE INVENTION

Automotive radars using millimeter waves draw attention as optimal radars for preventing a car crash, tracking an object while traveling, and the like, since they are less affected by climate conditions such as rain, fog, and snow, as well as dust and noise, as compared with ultrasonic radars and laser radars.

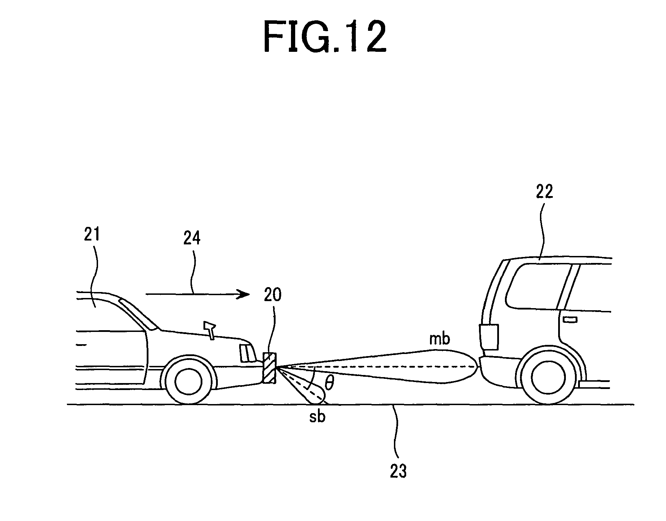

In the above application, as is illustrated in Fig. 12, an automotive millimeter wave radar 20 is installed to the front of a mobile object 21 and transmit signals are radiated through a mainlobe mb from an antenna toward a vehicle under detection (hereinafter referred to as a "target") 22. By observing frequency difference, phase difference, time difference, and the like between a signal reflected by the target 22 and a transmit signal, the velocity and distance to the target 22 can be determined.

Such a millimeter wave radar has a good detection performance with small noise, when the mobile object 21 is at a stop. Meanwhile, an antenna has sidelobes which are oriented in different directions from the mainlobe, in addition to the mainlobe that is useful as having a maximum radiation power in this direction. The radiation power of the sidelobes is lower than that of the mainlobe, and the detection performance is deteriorated by the sidelobes, when the mobile object 21 is traveling. For example, when the mobile object 21 travels at a moving velocity Vr in the direction of the arrow 24, reflection waves of a sidelobe sb radiation striking the road surface 23 at an angle of θ are received as a clutter noise, because of having a relative velocity of Vs in the following Equation (1) (by comparison, the velocity of reflection waves from a stationary object existing in the direction in front of the mobile object 21 is Vr = Vs, where θ= 0°; the velocity of reflection waves from under the mobile object 21 is Vr = 0, where θ = 90°).

$$V_s \ = \ V_r \cos\theta \ \ \ ... \ \ (1)$$

Consequently, signals from the target 22 through the mainlobe mb are buried in noise, which has posed problems such as poor accuracy of a detected distance and erroneous detection.

As measures for preventing the clutter by reflection waves from the road surface, as mentioned above, (which will hereinafter be referred to as a "road clutter"), sidelobe blockage by placing a metal plate in the lower part of the front of the antenna to reduce the clutter noise is disclosed in Japanese Patent Laid-Open No.2001-201557.

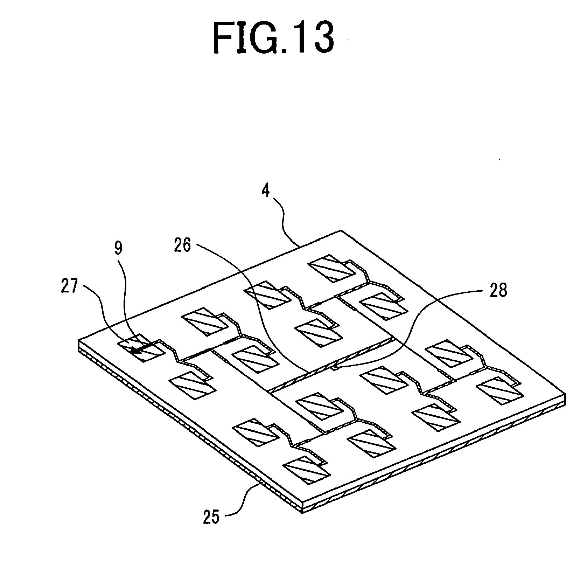

Conventionally, a patch antenna, as is shown in Fig. 13, is known as an antenna for a millimeter wave radar (see "Handbook of Microstrip Antennas", p. 980, written by J.R. James, et al. , published by Peter Peregrinus, Ltd.). The patch antenna is constructed on a dielectric substrate 4 with a ground conductor 25 on its bottom surface and has a plurality of patch elements 27, which are radiators. TEM mode power supplied from a feed point 28 by a coaxial line or the like is propagated through microstrip feed lines 26 and distributed to the patch elements 27. The arrow 9 on a patch element 27 indicates the direction of co-polarized waves and polarized waves oriented in this direction propagate in space. Because the patch antenna can be manufactured by chemically etching the dielectric substrate, it is a low-cost and thin antenna and popularly used for a millimeter wave radar.

Then, as a technique for reducing cross-polarized waves which are orthogonal to the direction of co-polarized waves, radiated from an antenna, there is a method for reducing the cross-polarized waves by using a slit plate [e.g., see IEEE TRANS, vol. AP-35, No. 4, April, 1987]. As a specific technique relating to the above method, for use in a patch antenna having a tri-plate structure of feed lines, a method in which a slit plate having slit window openings for radiation over each patch element is installed in front of the antenna and the antenna and the slit plate are covered by a ground conductor is disclosed in Japanese Patent Laid-Open No. H9-51225.

Also, a method in which a slit plate comprising strip lines is placed in front of a flat antenna and the flat antenna and the slit plate are connected via metal walls provided at the ends of the flat antenna is disclosed in Japanese Patent Laid-Open No.2001-326530.

SUMMARY OF THE INVENTION

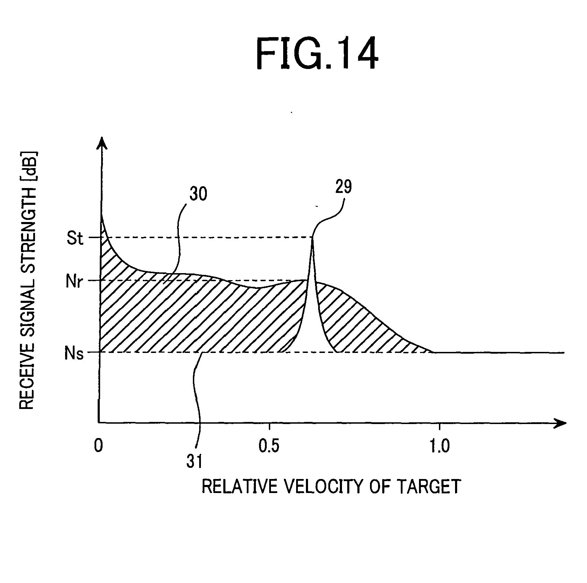

In a receive signal of an automotive millimeter wave radar, a noise increase by the above road clutter is explained, using Fig. 14. The abscissa plots a relative velocity of the target with regard to the vehicle equipped with the radar, normalized by the absolute velocity of the vehicle equipped with the radar, and the ordinate plots receive signal strength. A noise level, when the vehicle equipped with the radar is at a stop, is assumed to be a reference. This is determined by noise Ns (dB) which is produced by an electronic circuit portion of the radar, which corresponds to noise 31 in Fig. 14. Since the level of a receive signal 29 from the traveling target is St (dB), the S/N ratio, when the vehicle equipped with the radar is at a stop, is expressed as (St - Ns) (In Fig. 14, the velocity of the target is assumed to be about 0.6 times that of the traveling vehicle equipped with the radar).

Meanwhile, when the vehicle equipped with the radar is traveling, noise 30 due to the road clutter rapidly rises to Nr (dB). This is because reflection waves from the ground surface through a sidelobe have a relative velocity during the travel of the vehicle equipped with the radar and are received as the cluster noise with the level of Nr (dB). Therefore, the S/N ratio, when the vehicle equipped with the radar is traveling, is expressed as (St - Nr) (in this case, St is a value with regard to a velocity difference of 0.4), which becomes greatly worse than the S/N ratio, when the vehicle is at a stop, thus resulting in problems such as poor accuracy of a detected distance and erroneous detection. Especially, a noise level at a low relative velocity, produced by a sidelobe that vertically strikes the road surface, is significantly higher than noise at other relative velocities, because this sidelobe has the short distance with respect to the road surface.

Therefore, for a radar application in ACC (Adaptive Cruise Control) in which the sensitivity at a low relative velocity is important, it is needed to reduce the sidelobe that vertically strikes the road surface. As for the above-mentioned technique for preventing the road clutter by placing a metal plate in the lower part of the front of the antenna, there is a possibility that signals reflected by the metal plate cause erroneous detection, and the metal plate size must be large to provide a wide area for sidelobe blockage, which inevitably made the radar size large.

Meanwhile, sidelobes are mainly due to unwanted radiation of power from the feed lines of the path antenna. In a millimeter wave band, unwanted radiation from the feed lines and the feed is large and this deteriorated the radiation properties of the antenna. The main component of a sidelobe that is radiated, especially, in the direction horizontal to the antenna plane is cross-polarized waves, and therefore, reduction of the cross-polarized waves is effective for preventing the road clutter. However, as regards the sidelobe that vertically strikes the road surface, it is needed to reduce co-polarized waves, which are weak, as well as the cross-polarized waves, because this sidelobe provides a path with the shortest distance between the antenna and the road surface and the coefficient of reflection of the road surface is maximum for this sidelobe.

An automotive radar may be mounted in various positions in a vehicle, its positioning depending on the vehicle using it. To minimize effects of a multipath due to diffuse reflection from the surface of the vehicle body, unwanted sidelobes other than those striking the road surface must be reduced as possible.

An object of the present invention is to solve the above-described problems and to provide a small and light automotive radar having a high detection performance by preventing the road clutter and its in-vehicle positioning is optional.

In order to achieve the above object, an automotive radar of the present invention is characterized by comprising an antenna equipped with at least one radiating element which radiates linear polarized radio waves, a slit plate which is a metal plate in which a plurality of slits are defined, placed in front of the surface of the antenna, radio wave absorbers provided between the antenna and the slit plate, and a transceiver device which supplies transmit signals to the antenna to radiate radio waves and, from signals acquired by receiving reflection waves which are returned waves of the radio waves striking an obstruction, detects a direction in which the obstruction exists.

For the automotive radar of the present invention configured as above, it is possible to allow passage of co-polarized waves of the linear polarized waves through the slit plate and block cross-polarized waves which are main constituents of sidelobes, and consequently, thereby enabling reduction of the sidelobes and prevention of the road clutter. Together, particularly, as for a sidelobe that vertically strikes the road surface when the radar is mounted in a vehicle, co-polarized waves, which are weak, as well as the cross-polarized waves, which are main constituents of the sidelobe, can be reduced greatly by the radio wave absorbers. Consequently, the S/N ratio at a low relative velocity is improved and the detection performance can be enhanced significantly.

A distance between the antenna and the slit plate is around 1 mm, as will be described later, and it is not needed to place a protrusion as included in a conventional metal plate for reducing the clutter noise in front of the antenna. Therefore, the automotive radar of the present invention is small and light and can be mounted in any position where radio wave radiation is not impeded in a vehicle. In short, in-vehicle positioning of the radar is optional.

BRIEF DESCRIPTION OF THE DRAWINGS

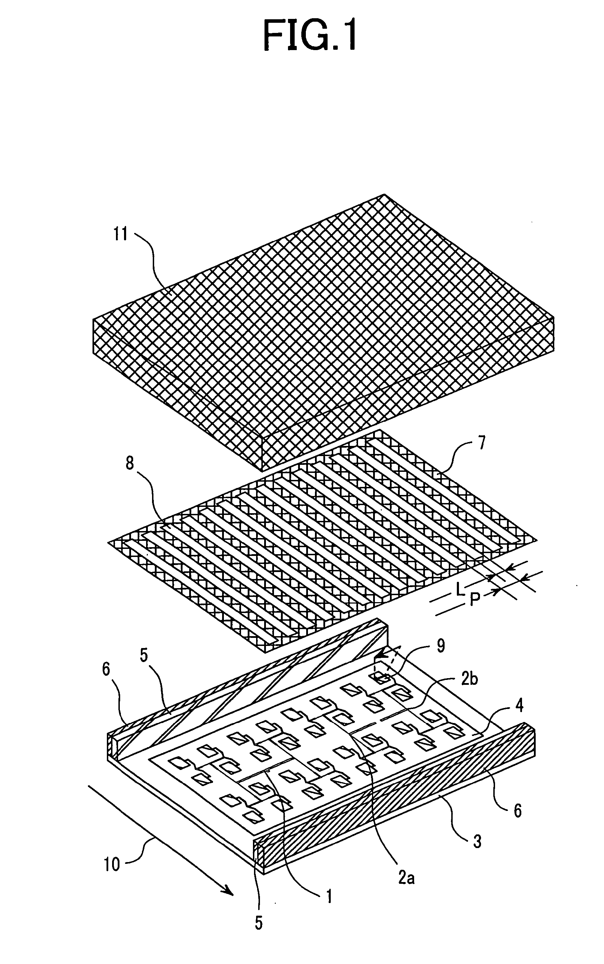

Fig. 1 is a structural diagram to explain a first embodiment of an automotive radar according to the present invention; Fig.

2 shows a cross-sectional view and a block diagram to explain the first embodiment of the present invention; Fig. 3 is a curve chart to explain the effect of the first embodiment of the present invention; Fig. 4 is a structural diagram of an automotive radar prepared for comparison; Fig. 5 is a structural diagram to explain a second embodiment of the present invention; Fig. 6 is a structural diagram to explain a third embodiment of the present invention; Fig. 7 is a structural diagram to explain a fourth embodiment of the present invention; Fig. 8 is a structural diagram to explain a fifth embodiment of the present invention; Fig. 9 is a structural diagram to explain a sixth embodiment of the present invention; Fig. 10 is a structural diagram to explain a seventh embodiment of the present invention; Fig. 11 is a cross-sectional diagram to explain the seventh embodiment of the present invention; Fig. 12 is an illustration to explain a conventional automotive radar; Fig. 13 is a structural diagram to explain a patch antenna; and Fig. 14 is a curve chart to explain a problem addressed by the present invention.

DETAILED DESCRIPTION OF THE PREFERRED EMBODIMENTS

The automotive radar of the present invention will now be described in further detail with reference to several embodiments thereof.

A first embodiment of the present invention is shown in Fig. 1. An arrow 10 denotes the direction facing toward the road surface, when the automotive radar has been installed in the vehicle. The radar of the present invention employs a patch antenna that radiates linear polarized waves, using patch elements as radiating elements. The radar transmits a transmit signal from a transmitting patch antenna 1, receives a signal reflected by a target via a receiving patch antenna 2a and a receiving patch antenna 2b, and detects the velocity, distance, and direction of the target from the received signal.

The transmitting patch antenna 1 and the receiving patch antennas 2a, 2b constructed on a dielectric substrate 4 are disposed on an antenna plate 3 made of a metal and covered by a radome 11 made of a dielectric material. Along both longitudinal edges of the antenna plate 3, radio wave absorbing sheets 5 backed with metal plates 6 for matching are placed. The radio wave absorbing sheets 5 are impedance matched in space by the metal plates 6 for matching to ensure that incoming radio waves are efficiently absorbed by the radio wave absorbing sheets 5 without being reflected.

A slit plate 7 installed in front of the antenna consists of a metal that is sufficiently thin with regard to wavelength, slits 8 with a width L being defined to be spaced at a pitch P therein, and is a structural part to sandwich the radio wave absorbing sheets 5 and the metal plates 6 for matching between it and the antenna plate 3. The length of the slits 8 is set to be sufficiently long relative to wavelength to enable preventing a deterioration in the antenna radiation pattern by resonance occurring with the slits.

The direction of co-polarized waves of the linear polarized waves of the patch antennas 1, 2a, 2b (hereinafter, they are collectively referred to as simply an "antenna") is denoted by an arrow 9. By configuring the slit plate 7 such that the longitudinal direction of the slits 8 is orthogonal to the co-polarized wave direction 9, the slit plate 7 has a property that allows passage of the co-polarized waves only and reflects the cross-polarized waves. A coefficient of reflection of the slit plate 7 for polarized waves which are parallel to the longitudinal direction of the slits 8 is described in the following Equation (2):

$$\left| R_{horizontal} \right|^2 = \frac{1}{1 + \left\{ \left( \frac{2P}{\lambda} \right) \ln \left( \cos \frac{\pi L}{2P} \right) \right\}^2} \qquad \ldots (2)$$

A coefficient of reflection of the slit plate 7 for polarized waves which are orthogonal to the longitudinal direction of the slits 8 is expressed in the following Equation (3):

$$\left| R_{vertical} \right|^2 = \frac{\left\{ \left( \frac{2P}{\lambda} \right) \ln \left( \sin \frac{\pi L}{2P} \right) \right\}^2}{1 + \left\{ \left( \frac{2P}{\lambda} \right) \ln \left( \sin \frac{\pi L}{2P} \right) \right\}^2} \qquad \ldots (3)$$

In these Equations, λ denotes free space wavelength at a frequency used. According to the above Equations, approximately, P/λ = 0.1 to 0.3 and L/P = 0.4 to 0.7 are appropriate for the purpose of reflecting the cross-polarized waves only. The radio wave absorbing sheets 5 and the metal plates 6 for matching take a role of reducing sidelobes produced by radio wave leakage from the clearance between the patch antenna 1 and the slit plate 7 and preventing a multipath of incident waves to the road surface and reflection waves from the road surface. By making the co-polarized wave direction of the antenna horizontal to the road surface, the angle at which the directivity of a single patch element becomes minimal corresponds to the direction toward the road surface, and consequently, the reflection waves from the road surface can be reduced.

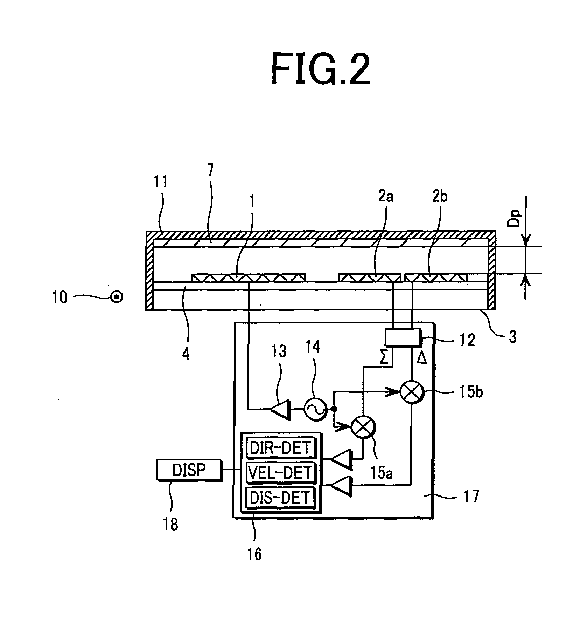

Fig. 2 shows a cross-sectional view corresponding to Fig. 1 and a block diagram. In the present embodiment, a mono-pulse method is used to detect the direction in which the target exists. A transceiver device 17 transmits a transmit signal via the transmitting patch antenna 1 and receives a signal reflected by an obstruction via the receiving patch antenna 2a and the receiving patch antenna 2b, and then generates a sum signal Σ and a difference signal Δ as mono-pulse signals, using a hybrid circuit 12.

The transceiver device 17 will be described below. An oscillator 14 generates amillimeterwave signal that is supplied via a power amplifier 13 to the transmitting patch antenna 1. The sum signal Σ and the difference signal Δ generated by the hybrid circuit 12 are supplied to mixers 15a and 15b, respectively and mixed with a signal output by the oscillator 14. By the mixing, the sum signal Σ and the difference signal Δ are each converted into intermediate frequency signals which are input to a signal processing circuit 16.

The signal processing circuit 16 performs direction detection (DIR-DET) for an object under detection, using the frequency converted signals of the sum signal Σ and a difference signal Δ, and performs velocity detection (VEL-DET), distance detection (DIS-DET) , and the like for the object under detection, using the sum signal Σ. Results of these detections are converted into signals suitable for an output device such as a display device (DSIP) 18, if necessary, and output to the output device.

This radar has the radome 11 made of a dielectric material to protect the antenna and the slit plate 7 and prevent the detection performance of the radar from secular deterioration. To facilitate fixing, the slit plate 7 is brought in contact with the radome 11 and located at a distance Dp from the antenna surface. If the distance Dp between the slit plate 7 and the antenna surface is smaller than one-eighth of an effective wavelength at a frequency used, the pattern of radiation of the co-polarized waves and the impedance characteristic of the antenna are deteriorated. If that distance is greater than one-half of the effective wavelength, a mode of propagation between the antenna surface and the slit plate 7 takes place and the cross-polarized wave reduction property of the slit plate 7 deteriorates. Therefore, it is desired to set the distance Dp between one-eighth and one-half of the effective wavelength.

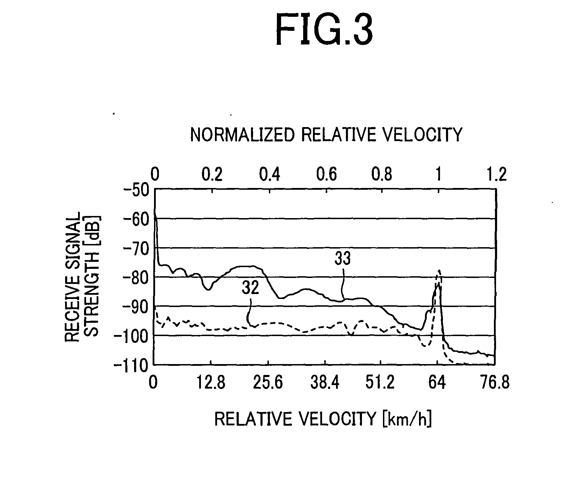

Fig. 3 is a chart showing the effect of the present embodiment. In the automotive radar of the present embodiment, the slit plate 7 is a metal plate that is 0.05 mm thick and setting is done as follows: the slit width L = 0.4 mm, pitch P = 0.8 mm, and the distance Dp between the slit plate and the antenna = 1.0 mm. As the material of the radio wave absorbing sheets 5, hexagonal ferrite is used and 0.35 mm thick sheets adapted such that they are impedance matched by the metal plates 6 for matching and the most absorbing of vertically incident plane waves are utilized.

The automotive radar configured in this way is mounted on a automobile and receive signal strength, when the automobile is run at 64 km/h on an asphalt road, is measured; its actual measurements are plotted in Fig. 3. Because the measurements are taken with no target vehicle being in the forward of the automobile, cluster noise caused by the sidelobe that strikes the road surface at an angle of θ is observed as the receive signal (on the ordinate) in relation to its relative velocity Vs (on the abscissa) when viewed from the automobile, as formulated in Equation (1). This is represented by an actual measurement curve 32 in this embodiment.

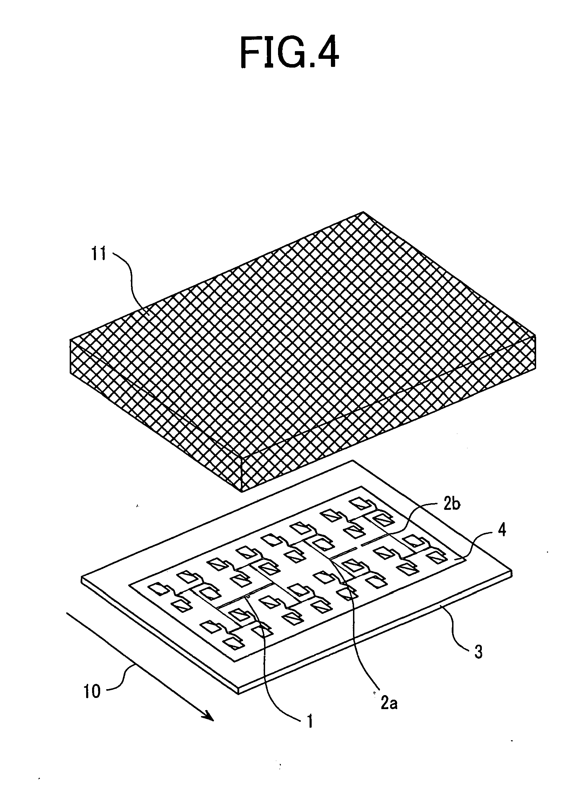

For comparison purposes, an actual measurement curve 33 for the case of a radar housed only in the radome 11 without using the slit plate or the like, which is shown in Fig. 4, is shown together in Fig. 3.

In Fig. 3, a peak appearing at a relative velocity of 64 km/h is the total sum of weak signals of reflections from a stationary object other than the road surface, existing in the forward direction of the automobile equipped with the radar. Comparing both clutter noises in a relative velocity range of 0 to 60 km/h, dependency on the relative velocity is large as 58 db to 97 dB for the radar housed only in the radome, whereas it is very good as 91 dB to 100 dB for the present embodiment, and the clutter noise reduction effect of the present embodiment is obvious.

Comparing the noises, particularly, at a relative velocity of 0 km/h, against 58 dB for the radar housed only in the radome, 91 dB for the present embodiment indicates significant improvement. Thus, the invention is very effective for radar application in ACC (Adaptive Cruise Control) in which the S/N ratio at a low relative velocity is important.

Although the automobile equipped with the radar is run at 64 km/h for the above measurement, it is apparent that Fig. 3, if normalized by the speed of the automobile equipped with the radar, can apply to any velocity. Thus, the normalized velocity is scaled as normalized relative velocity on the top abscissa in Fig. 3.

In the present embodiment, the patch antennas 1, 2a, 2b can be manufactured by processing the dielectric substrate by chemical etching or the like and, consequently, the manufacturing cost can be reduced.

Although the slit plate 7 is placed in contact with the radome 11, man-hours and cost of assembly can be reduced by using a technique for forming the same metal pattern as the slit plate 7 on the inner surface of the radome 11 by plating, printing, and the like, and by using a technique for integrating the slit plate 7 into the radome 11.

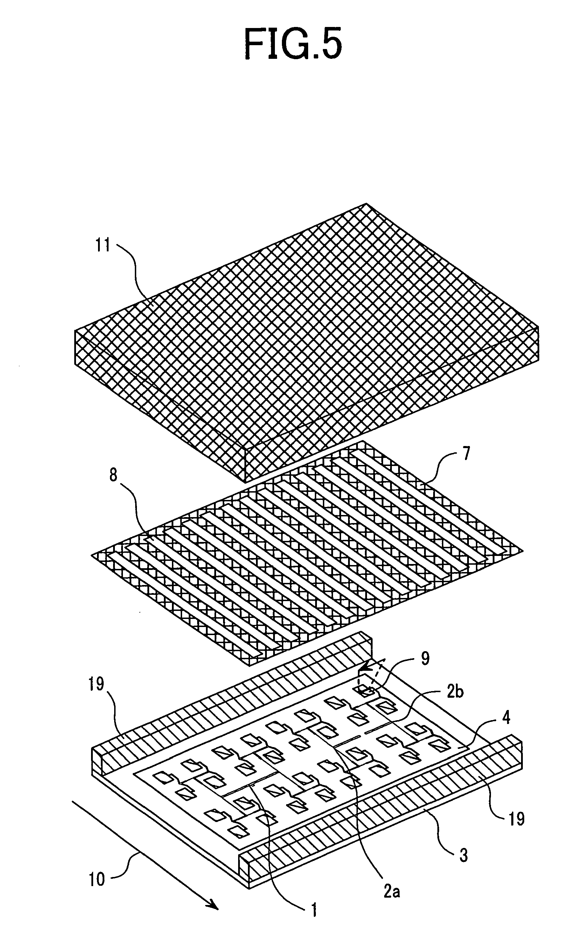

A second embodiment of the present invention is shown in Fig. 5. An arrow 10 denotes the direction facing toward the road surface, when the automotive radar has been installed in the vehicle. The transmitting patch antenna 1 and the receiving patch antennas 2a, 2b constructed on the dielectric substrate 4 are disposed on the antenna plate 3 made of a metal and covered by the radome 11 made of a dielectric material. The same device as used in the first embodiment is used for the transmitter device.

Along both edges of top and bottom direction of the antenna plate 3, radio wave absorbing blocks 19 made of hexagonal ferrite are placed. The slit plate 7 installed in front of the antenna consists of a metal that is sufficiently thin with regard to wavelength, slits 8 being defined to be spaced at a pitch therein, and is a structural part to sandwich the radio wave absorbing blocks 19 between it and the antenna plate 3. The length of the slits 8 is set to be sufficiently long relative to wavelength to prevent resonance from occurring with the slits, the resonance causing a deterioration in the antenna radiation pattern.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves.

According to the present embodiment, sidelobes consisting mainly of the cross-polarized waves from the feed lines of the patch antennas can be reduced and the road clutter can be prevented. Thereby, a high detection performance can be achieved. Particularly, as for a sidelobe that vertically strikes the road surface, co-polarized waves, which are weak, as well as the cross-polarized waves, which are main constituents, can be reduced greatly by the radio wave absorbers. Consequently, it is possible to improve the S/N ratio at a low relative velocity. Thus, the automotive radar of the present invention is very effective for radar application in ACC (Adaptive Cruise Control).

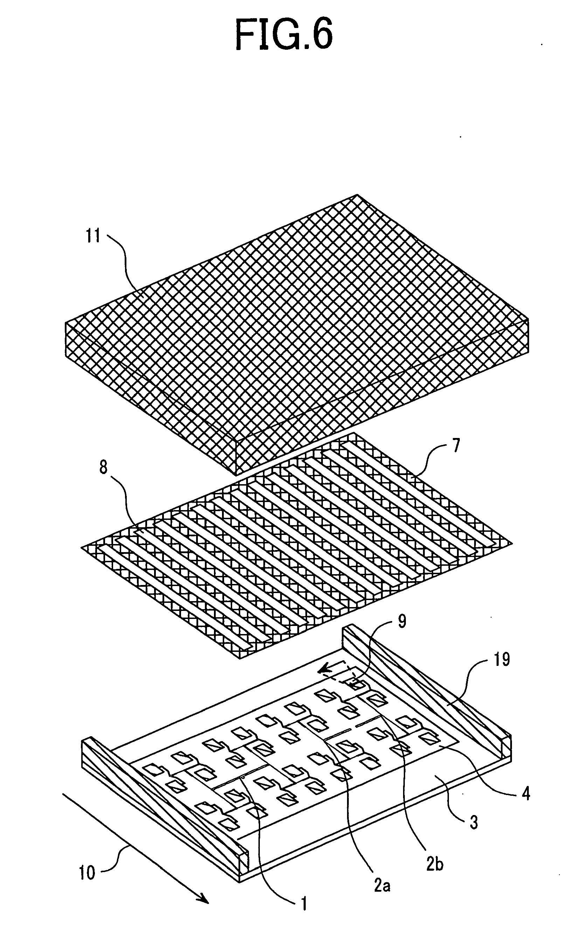

A third embodiment of the present invention is shown in Fig. 6. An arrow 10 denotes the direction facing toward the road surface, when the automotive radar has been installed in the vehicle. The transmitting patch antenna 1 and the receiving patch antennas 2a, 2b constructed on the dielectric substrate 4 are disposed on the antenna plate 3 made of a metal and covered by the radome 11 made of a dielectric material. The same device as used in the first embodiment is used for the transmitter device.

Along both edges of horizontal direction of the antenna plate 3, radio wave absorbing blocks 19 made of hexagonal ferrite are placed. The slit plate 7 installed in front of the antenna consists of a metal that is sufficiently thin with regard to wavelength, slits 8 being defined to be spaced at a pitch therein, and is a structural part to sandwich the radio wave absorbing blocks 19 between it and the antenna plate 3. The length of the slits 8 is set to be sufficiently long relative to wavelength to prevent resonance from occurring with the slits, the resonance causing a deterioration in the antenna radiation pattern.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves.

According to the present embodiment, sidelobes consisting mainly of the cross-polarized waves from the feed lines of the patch antennas can be reduced and, moreover, effects of a multipath from the horizontal direction can be suppressed to a minimum. Thereby, a high detection performance can be achieved.

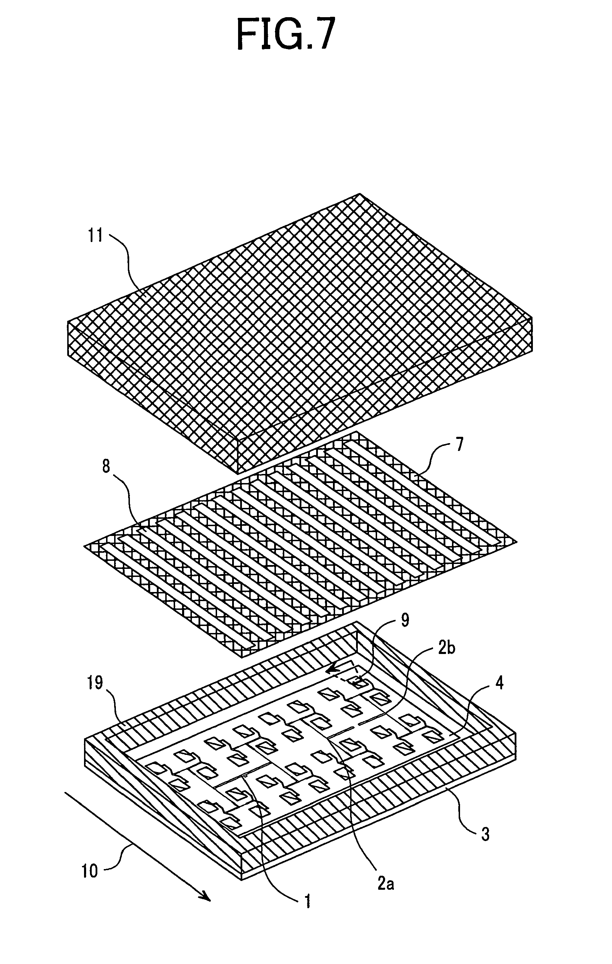

A fourth embodiment of the present invention is shown in Fig. 7. An arrow 10 denotes the direction facing toward the road surface, when the automotive radar has been installed in the vehicle. The transmitting patch antenna 1 and the receiving patch antennas 2a, 2b constructed on the dielectric substrate 4 are disposed on the antenna plate 3 made of a metal and covered by the radome 11 made of a dielectric material. The same device as used in the first embodiment is used for the transmitter device.

Along the four edges of the antenna plate 3, a radio wave absorbing block 19 made of hexagonal ferrite is placed so as to surround the antenna. The slit plate 7 installed in front of the antenna consists of a metal that is sufficiently thin with regard to wavelength, slits 8 being defined to be spaced at a pitch therein, and is a structural part to sandwich the radio wave absorbing blocks 19 between it and the antenna plate 3. The length of the slits 8 is set to be sufficiently long relative to wavelength so that the antenna radiation pattern does not deteriorate by resonance occurring with the slits.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves.

According to the present embodiment, sidelobes consisting mainly of the cross-polarized waves from the feed lines of the patch antennas can be reduced and the road clutter can be prevented. In addition, effects of a multipath from both horizontal and vertical directions can be suppressed to a minimum. Thereby, a high detection performance can be achieved. Particularly, as for a sidelobe that vertically strikes the road surface, co-polarized waves, which are weak, as well as the cross-polarized waves, which are main constituents of the sidelobe, can be reduced greatly by the radio wave absorber. It is possible to improve the S/N ratio at a low relative velocity, and thus, the automotive radar of the present invention is very effective for radar application in ACC (Adaptive Cruise Control).

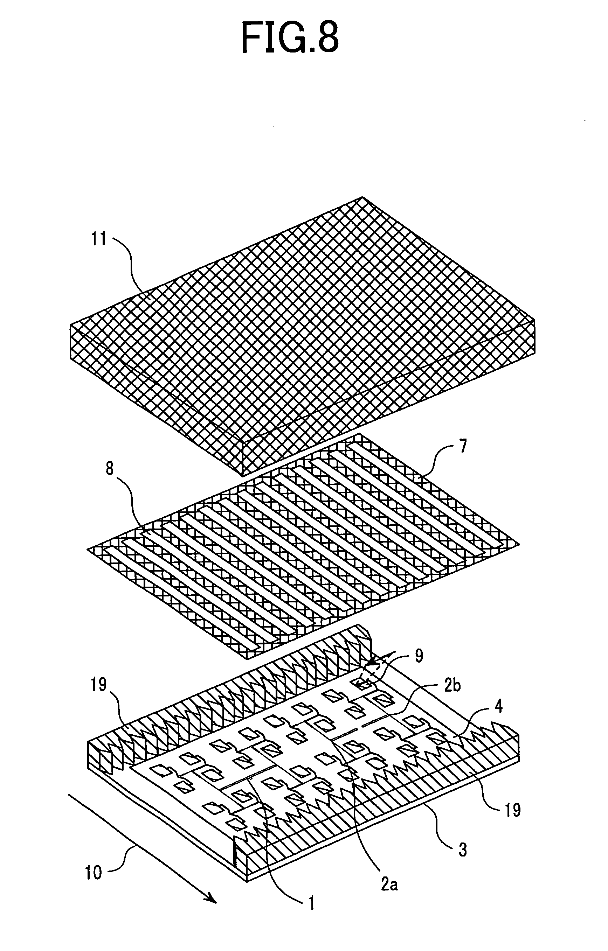

A fifth embodiment of the present invention is shown in Fig. 8. An arrow 10 denotes the direction facing toward the road surface, when the automotive radar has been installed in the vehicle. The transmitting patch antenna 1 and the receiving patch antennas 2a, 2b constructed on the dielectric substrate 4 are disposed on the antenna plate 3 made of a metal and covered by the radome 11 made of a dielectric material. The same device as used in the first embodiment is used for the transmitter device.

Along both edges of top and bottom direction of the antenna plate 3, radio wave absorbing blocks 19 made of hexagonal ferrite are placed. The radio wave absorbing blocks 19 have a geometry of a repetitive pattern of regularly spaced peaks and troughs facing the antenna. The slit plate 7 installed in front of the antenna consists of a metal that is sufficiently thin with regard to wavelength, slits 8 being defined to be spaced at a pitch therein, and is a structure part to sandwich the radio wave absorbing blocks 19 between it and the antenna plate 3. The length of the slits 8 is set to be sufficiently long relative to wavelength to prevent resonance from occurring with the slits , the resonance causing a deterioration in the antenna radiation pattern.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves. The radio wave absorbing blocks 19 are desirably configured such that a gap between a peak and a trough is not less than one free space wavelength and a pitch between peaks is not more than one-third of the gap between a peak and a trough in order to obtain matching with free space.

According to the present embodiment, sidelobes consisting mainly of the cross-polarized waves from the feed lines of the patch antennas can be reduced and the road clutter can be prevented. Thereby, a high detection performance can be achieved. Particularly, as for a sidelobe that vertically strikes the road surface, co-polarized waves, which are weak, as well as the cross-polarizedwaves , which are main constituents , can be reduced greatly by the radio wave absorbers. It is possible to improve the S/N ratio at a low relative velocity, and thus, the automotive radar of the present invention is very effective for radar application in ACC (Adaptive Cruise Control).

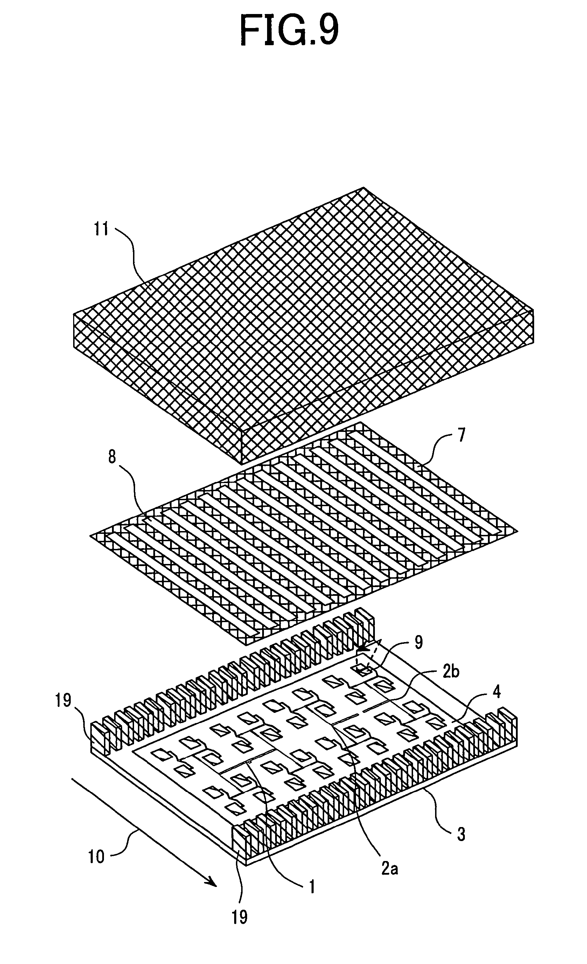

A sixth embodiment of the present invention is shown in Fig. 9. An arrow 10 denotes the direction facing toward the road surface, when the automotive radar has been installed in the vehicle. The transmitting patch antenna 1 and the receiving patch antennas 2a, 2b constructed on the dielectric substrate 4 are disposed on the antenna plate 3 made of a metal and covered by the radome 11 made of a dielectric material. The same device as used in the first embodiment is used for the transmitter device.

Along both edges of top and bottom direction of the antenna plate 3, radio wave absorbing blocks 19 made of hexagonal ferrite are placed. The radio wave absorbing blocks 19 are shaped in thin rectangular solids, placed such that their longitudinal direction is orthogonal to the co-polarized wave direction, and arranged, spaced at a pitch along the edges of the antenna plate. The slit plate 7 installed in front of the antenna consists of a metal that is sufficiently thin with regard to wavelength, slits 8 being defined to be spaced at a pitch therein, and is a structural part to sandwich the radio wave absorbing blocks 19 between it and the antenna plate 3. The length of the slits 8 is set to be sufficiently long relative to wavelength to prevent resonance from occurring with the slits, the resonance causing a deterioration in the antenna radiation pattern.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves. Because the radio wave absorbing blocks 19 provide effective absorption of radio waves, preferably, the blocks having a thickness in the co-polarized wave direction of the antenna are arranged at a pitch not more than one-fourth of free space wavelength, not more than one-half of free space wavelength.

According to the present embodiment, sidelobes consisting mainly of the cross-polarized waves from the feed lines of the patch antennas can be reduced and the road clutter can be prevented. Thereby, a high detection performance can be achieved. Particularly, as for a sidelobe that vertically strikes the road surface, co-polarized waves, which are weak, as well as the cross-polarized waves, which are main constituents of the sidelobe, can be reduced greatly by the radio wave absorbers. It is possible to improve the S/N ratio at a low relative velocity, and thus, the automotive radar of the present invention is very effective for radar application in ACC (Adaptive Cruise Control).

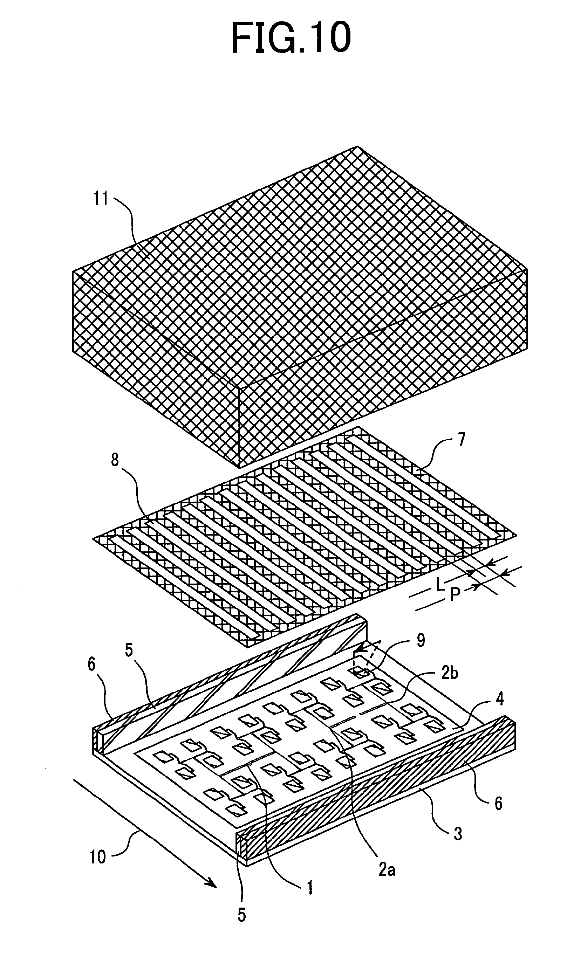

A seventh embodiment of the present invention is shown in Fig. 10. An arrow 10 denotes the direction facing toward the road surface, when the automotive radar has been installed in the vehicle. In the present embodiment, a transmit signal is transmitted from the transmitting patch antenna 1 and a signal ref lected by the target is received by the receiving patch antenna 2a and the receiving patch antenna 2b and the velocity, distance, and direction of the target are detected from the thus received signals. For the transceiver device to do this, the same device as used in the first embodiment is used.

The transmitting patch antenna 1 and the receiving patch antennas 2a, 2b constructed on the dielectric substrate 4 are disposed on the antenna plate 3 made of a metal and covered by the radome 11 made of a dielectric material.

Along both edges of top and bottom direction of the antenna plate 3, radio wave absorbing sheets 5 backed with metal plates 6 for matching are placed. The slit plate 7 installed in front of the antenna consists of a metal that is sufficiently thin with regard to wavelength, slits 8 with a width L being defined to be spaced at a pitch P therein, and is a structural part to sandwich the radio wave absorbing sheets 5 and the metal plates 6 for matching between it and the antenna plate 3. The length of the slits 8 is set to be sufficiently long relative to wavelength to prevent resonance from occurring with the slits, the resonance causing a deterioration in the antenna radiation pattern.

The direction of co-polarized waves being radiated from the antenna is denoted by an arrow 9 and, by configuring the slit plate 7 such that the longitudinal direction of the slits 8 is orthogonal to the co-polarized wave direction 9, the slit plate 7 has a property that allows passage of the co-polarized waves only and reflects the cross-polarized waves.

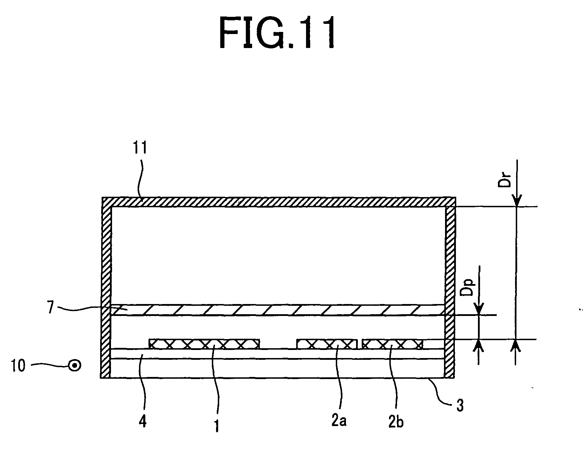

A cross-sectional diagram of the present embodiment is shown in Fig. 11. The present embodiment includes the radome 11 made of a dielectric material to protect the antenna and the slit plate 7 and prevent the detection performance of the radar from secular deterioration. If the distance Dp between the slit plate 7 and the antenna surface is smaller than one-eighth of an effective wavelength, the pattern of radiation of the co-polarized waves and the impedance characteristic of the antenna are deteriorated. If that distance is greater than one-half of the effective wavelength, a mode of propagation between the antenna surface and the slit plate 7 takes place and the cross-polarized wave reduction property of the slit plate 7 deteriorates. Therefore, it is desired to set the distance Dp between one-eighth and one-half of the effective wavelength.

In the present embodiment, the distance Dr between the radome 11 and the antenna surface is set larger than Dp. In the case where reflection from the radome or random excitation distribution across the antenna surface occurs due to mismatching with space, this can be prevented and a high azimuth accuracy is obtained.

According to the present embodiment, sidelobes consisting mainly of the cross-polarized waves from the feed lines of the patch antennas can be reduced and the road clutter can be prevented. Thereby, a high detection performance can be achieved. Particularly, as for a sidelobe that vertically strikes the road surface, co-polarized waves, which are weak, as well as the cross-polarizedwaves , which are main constituents of the sidelobe, can be reduced greatly by the radio wave absorbers. It is possible to improve the S/N ratio at a low relative velocity, and thus, the automotive radar of the present invention is very effective for radar application in ACC (Adaptive Cruise Control system).

While, in the present embodiment, the radio wave absorbing sheets 5 with the metal plates 6, used in the first embodiment, are placed along both edges of top and bottom direction of the antenna plate 3, as shown in Fig. 10, the radio wave absorbing blocks 19, used in the second through sixth embodiments, may be placed along both edges of top and bottom direction, both horizontal edges, or the four edges of the antenna plate 3.

While, in the foregoing first through seventh embodiments, the radio wave absorbing sheets 5 or the radio wave absorbing blocks 19 are positioned along both edges of the antenna plate 3, they may terminate at any point between the outermost antenna element and the end of the antenna plate 3; this produces the same effect. While each of the radio wave absorbing sheets 5 or the radio wave absorbing blocks 19 is placed to cover the entire surface of a side consisting of the end side of the slit plate 7 and the end side of the antenna plate 3, the radio wave absorber may be embedded in part of the side surface, so that a multipath can be removed efficiently.

Although hexagonal ferrite was mentioned as the material of the radio wave absorbing sheets 5 or the radio wave absorbing blocks 19, instead, a carbon material such as carbon nanotube, carbon fiber and the like may be used. Furthermore, a structure such that carbon particles are mixed into a material such as urethane and sponge to attenuate radio waves may be used.

The slit plate 7 made of a metal can be configured on the dielectric substrate or the like. This enhances profile irregularity and improves the cross-polarized wave reduction property, and, moreover, implementation of a multiplayer substrate in which the slit plate is integrated, together with the antenna and related circuits, is feasible at low cost.

Although the patch antennas are used as the antenna, needless to say, a flat antenna such as a tri-plate antenna and a slot antenna may be used, moreover, a cubic antenna such as a dielectric lens antenna, a parabola antenna, and a horn antenna can be used instead. Furthermore, while the foregoing description has been made, using the mono-pulse-based system including the transmitting antenna and the two receiving antennas, the present invention can be applied to a configuration including at least either a transmitting antenna or a receiving antenna.

As described above, according to the present invention, by reducing the sidelobes of the antenna, consisting mainly of cross-polarized waves, it is possible to prevent the road clutter; consequently, the invention has an effect in which it can provide an automotive radar with a high detection performance in detecting the direction in which an obstruction exists, relative distance, relative velocity, and the like. Particularly, as for the sidelobe that vertically strikes the road surface, making a significant decrease in the relative velocity, co-polarized waves, which are weak, as well as the cross-polarized waves, which are main constituents of the sidelobe, can be reduced greatly by the radio wave absorbers. It is possible to improve the S/N ratio at a low relative velocity. Thus, the invention has an effect in which it can provide an automotive radar that is very effective for radar application in ACC (Adaptive Cruise Control system). The automotive radar of the present invention does not have a protrusion in front of it and, therefore, it is thin. In addition, the radar can be manufactured by an easy manufacturing process, thereby enabling downsizing with reduced weight and low cost.

As described above, the present invention is useful generally for mobile objects that travel on the ground, while detecting an obstruction, and is suitable for use in, particularly, vehicles such as automobiles having a function of preventing a car crash or tracking an object while traveling.

**Claims**

1. An automotive radar comprising:

   an antenna equipped with at least one radiating element which radiates linear polarized radio waves;
   a slit plate which is a metal plate in which a plurality of slits are defined, placed in front of the surface of the antenna;
   radio wave absorbers provided between the antenna and the slit plate; and
   a transceiver device which supplies transmit signals to the antenna to radiate radio waves and, from signals acquired by receiving reflection waves which are returned waves of the radio waves striking an obstruction, detects a direction in which the obstruction exists.

2. The automotive radar according to claim 1, wherein the longitudinal direction of the slits defined in the slit plate is orthogonal to the direction of co-polarized waves being radiated from the radiating element.

3. The automotive radar according to claim 1, wherein a distance between the antenna and the slit plate falls within a range from one-eighth to one-half of an effective wavelength at a frequency used by the radar.

4. The automotive radar according to claim 1, wherein the radio wave absorbers are placed between edges of the antenna and edges of the slit plate to block at least unwanted radiation in a top and bottom direction when the radar is mounted on a mobile object.

5. The automotive radar according to claim 1, wherein the radio wave absorbers are placed between edges of the antenna and edges of the slit plate to block at least unwanted radiation in a horizonal direction when the radar is mounted on a mobile object.

6. The automotive radar according to claim 1, further comprising a radome made of a dielectric material, wherein the antenna and the slit plate are covered by the radome.

7. The automotive radar according to claim 6, wherein at least one surface of the slit plate is brought in contact with the radome.

8. The automotive radar according to claim 6, wherein a distance between the radome and the antenna is larger than a distance between the slit plate and the antenna.

9. An automotive radar comprising:

   an antenna which radiates linear polarized radio waves in a forward direction;
   a slit plate which is a metal plate in which a plurality of slits are defined, placed in front of the antenna;
   radio wave absorbers provided between the antenna and the slit plate to absorb radio waves being radiated in a direction orthogonal to a forward direction of the antenna; and
   a transceiver device which supplies transmit signals to the antenna to radiate radio waves and, from signals acquired by receiving reflection waves which are returned waves of the radio waves reflected by an obstruction, detects a direction in which the obstruction exists.

10. The automotive radar according to claim 9, wherein the radio wave absorbers are placed between edges of the antenna and edges of the slit plate to block at least unwanted radiation in a top and bottom direction when the radar is mounted on a mobile object.

# FIG.1

# FIG.2

# FIG.3

NORMALIZED RELATIVE VELOCITY

RELATIVE VELOCITY [km/h]

# FIG.4

# FIG.5

# FIG.6

# FIG.7

# FIG.8

# FIG.9

# FIG.10

# FIG.11

# FIG.12

# FIG.13

# FIG.14

# EP 1 689 030 A1

## INTERNATIONAL SEARCH REPORT

| | International application No. |
|---|---|
| | PCT/JP03/14543 |

**A. CLASSIFICATION OF SUBJECT MATTER**
Int.Cl⁷ H01Q17/00, H01Q1/52, H01Q21/06, G01S13/93, G01S7/03,
H01Q13/08, H01Q1/32

According to International Patent Classification (IPC) or to both national classification and IPC

**B. FIELDS SEARCHED**

Minimum documentation searched (classification system followed by classification symbols)
Int.Cl⁷ H01Q17/00, H01Q1/52, H01Q21/06, G01S13/93, G01S7/03,
H01Q13/08, H01Q1/32

Documentation searched other than minimum documentation to the extent that such documents are included in the fields searched
Jitsuyo Shinan Koho           1922–1996    Jitsuyo Shinan Toroku Koho    1996–2005
Kokai Jitsuyo Shinan Koho     1971–2005    Toroku Jitsuyo Shinan Koho    1994–2005

Electronic data base consulted during the international search (name of data base and, where practicable, search terms used)
JOIS, WPI, IEEEXPLORE

**C. DOCUMENTS CONSIDERED TO BE RELEVANT**

| Category* | Citation of document, with indication, where appropriate, of the relevant passages | Relevant to claim No. |
|---|---|---|
| A | JP 2001-201557 A (Hitachi, Ltd.), 27 July, 2001 (27.07.01), Full text; Figs. 1 to 14 & US 2001-026237 A1    & EP 1118872 A2 | 1-10 |
| A | JP 04-140905 A (Hitachi Chemical Co., Ltd.), 14 May, 1992 (14.05.92), Full text; Figs. 1 to 4 (Family: none) | 1-10 |
| A | JP 10-028011 A (Mitsubishi Electric Corp.), 27 January, 1998 (27.01.98), Full text; Figs. 1 to 10 (Family: none) | 1-10 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier document but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 31 March, 2005 (31.03.05) | 19 April, 2005 (19.04.05) |

| Name and mailing address of the ISA/ | Authorized officer |
|---|---|
| Japanese Patent Office | |
| Facsimile No. | Telephone No. |

Form PCT/ISA/210 (second sheet) (July 1998)

24

**INTERNATIONAL SEARCH REPORT**

| International application No. |
| --- |
| PCT/JP03/14543 |

C (Continuation).   DOCUMENTS CONSIDERED TO BE RELEVANT

| Category* | Citation of document, with indication, where appropriate, of the relevant passages | Relevant to claim No. |
| --- | --- | --- |
| A | JP 09-046129 A  (Mitsubishi Electric Corp.),<br>14 February, 1997 (14.02.97),<br>Full text; Figs. 1 to 14<br>(Family: none) | 1-10 |
| A | JP 10-126146 A  (Mitsubishi Electric Corp.),<br>15 May, 1998 (15.05.98),<br>Full text; Figs. 1 to 14<br>(Family: none) | 1-10 |

Form PCT/ISA/210 (continuation of second sheet) (July 1998)